# NEUE EUROPÄISCHE PATENTSCHRIFT

(11) **EP 3 645 273 B2**
(45) Veröffentlichungstag und Bekanntmachung des Hinweises auf die Entscheidung über den Einspruch: **06.03.2024**
(45) Hinweis auf die Patenterteilung: 07.07.2021
(21) Anmeldenummer: 18773329.0
(22) Anmeldetag: 16.08.2018
(51) Int. Cl.: B32B 15/01, B23K 35/02, B23K 35/28, C21D 7/13

(54) **VERFAHREN ZUR HERSTELLUNG VON BAUTEILEN AUS METALLBLECH**
METHOD FOR PRODUCING COMPONENTS FROM METAL PLATE
PROCEDE DE PRODUCTION DE COMPOSANTS A PARTIR D'UNE PLAQUE METALLIQUE

(30) Priorität: 22.09.2017 DE 102017121975
(43) Veröffentlichungstag der Anmeldung: 06.05.2020
(73) Patentinhaber: GEDIA Gebrüder Dingerkus GmbH, 57439 Attendorn (DE)
(72) Erfinder: KINKELBUR, Thomas, 44265 Dortmund (DE); DOHLE, Michael, 57392 Schmallenberg (DE)
(74) Vertreter: Köchling, Conrad-Joachim
(86) Internationale Anmeldenummer: PCT/DE2018/100716
(87) Internationale Veröffentlichungsnummer: WO 2019/057235

(56) Entgegenhaltungen:
- EP-A1- 2 889 102
- EP-A1- 3 184 228
- WO-A1-2011/054575
- CN-A- 103 787 580
- DE-A1-102016 013 466
- DE-B3-102016 114 068
- DE-C1- 10 135 647
- US-A1- 2002 069 506
- The Book of Steel, (1996), S. XXV & S.893
- Silane based field level surface treatment methods for aluminium,titanium and steel bonding" International journal of Adhesion &Adhesives., 48 (2014) 268-279
- CRC Handbook of Chemistry and Physics 95,h Edition, (2014 2015),S. 4-87. 4-87. 4-88 and 13-9

## Beschreibung

Die Erfindung betrifft ein Verfahren zur Herstellung von Bauteilen aus Metallblech, insbesondere aus Stahlblech, wobei auf ein Grundblech zur Bildung einer Materialdoppelung mindestens ein Patchblech aufgelegt wird und lagesicher fixiert wird, die so gebildete Bauteileinheit aus Grundblech und Patchblech auf eine zur Warmumformung geeignete Temperatur erwärmt und anschließend zu dem Bauteil warmumgeformt wird und vorzugsweise anschließend oder gleichzeitig einer partiellen oder totalen Kühlung oder Abschreckung zum Zwecke einer gezielten Gefügeumwandlung unterworfen wird.

Bauteile im Karosseriebereich von Kraftfahrzeugen aller Art werden zunehmend durch Verfahren erstellt, bei welchen das Bauteil auf eine hohe Temperatur erwärmt wird, anschließend warm umgeformt wird und gezielt gekühlt und gehärtet wird.

Mit solchen Verfahren erhält man Bauteile höchster Festigkeit und ausreichender Flexibilität.

Das zur Anwendung kommende Rohmaterial ist häufig durch eine Zinkbeschichtung vor Korrosion geschützt, zunehmend aber auch durch eine Beschichtung aus einer Aluminium/SiliciumVerbindung, die aber einen deutlich schlechteren Korrosionsschutz bildet.

Um die Erfordernisse des Korrosionsschutzes zu erfüllen, werden bisher solche Bauteile in späteren Produktionsphasen mit Korrosionsschutz-Lacken beschichtet, überwiegend im Wege der kathodischen Tauchlackierung (KTL). Hierbei wird eine Lackabscheidung auf dem Produkt durch Stromfluss erreicht.

Sofern Oberflächen von zu erzeugenden Bauteilen während des Warmumformverfahrens oder bei späteren Fügeverfahren durch andere Bauteile flächig abgedeckt sind, so entstehen hierdurch Materialdoppelungen, beispielsweise zu Verstärkungszwecken. Hierbei kann aber bei nachfolgender KTL-Beschichtung in den Spalt zwischen dem Grundblech und dem aufgelegtem Patchblech die Beschichtung nicht eindringen und abgeschieden werden. Somit sind die zwischen den Teilen entstandenen Spalte nicht nur unvollständig gegen Korrosion geschützt, sondern diese werden sich auch bevorzugt mit Flüssigkeiten füllen, insbesondere durch Kapillarwirkung. Damit findet zwischen den Teilen ein Korrosionsprozess deutlich beschleunigt statt.

Aus der DE 10 2016 114 068 B3 ist ein Längsträger für ein Kraftfahrzeug bekannt. Dieser Längsträger ist durch einen hohlen Körper gebildet, der aus einem 3-lagigen Mehrlagenstahl ausgebildet ist. Die mittlere Lage ist aus einem gehärteten Mangan-Bor-Stahl gebildet. Zwei die mittlere Lage umschließende Außenlagen sind aus einer ferritischen nicht rostenden Stahllegierung ausgebildet. Damit ist ein mehrlagiges Bauteil gebildet. Eine Korrosionsschutzbeschichtung ist hier aber nicht vorgesehen.

Aus der EP 3 184 228 A1 ist die Verwendung von Sauerstoffbarrierebeschichtungen auf Metallsubstraten beschrieben, um diese bei Schweißvorgängen vor Verzunderung und Metallspritzern oder dergleichen zu schützen.

Aus der WO 2011/054575 A1 ist ein Verfahren zum Herstellen von Bauteilen mit Bereichen unterschiedlicher Duktilität bekannt, wobei auf ein Grundblech ein weiteres Blech aufgebracht und befestigt wird.

Aus der DE 10 2016 013 466 A1 ist ein Verbundblech, bestehend aus einem Grundblech und Verstärkungsblech bekannt, wobei diese Bleche gemeinsam pressgehärtet werden.

Ausgehend von diesem Stand der Technik liegt der Erfindung die Aufgabe zugrunde, ein Verfahren gattungsgemäßer Art zur Verfügung zu stellen, bei dem ein verbesserter Korrosionsschutz zwischen den aufeinanderliegenden Flächen von Grundblech und Patchblech erreicht wird.

Zur Lösung dieser Aufgabe schlägt die Erfindung vor, dass das Grundblech im Auflagebereich des Patchbleches oder das Patchblech auf seiner dem Grundblech zugewandten Seite oder sowohl Grundbleche als auch Patchblech in dem entsprechenden Bereich vor dem Auflegen des Patchbleches auf das Grundblech mit einer den bei der Warmumformung auftretenden Temperaturen widerstehenden Korrosionsschutzbeschichtung beschichtet wird, die auch der Abdichtung dieses Spaltes dienen kann und so das Eindringen von Korrosionsfördernden Substanzen verhindern kann.

Dabei ist vorgesehen, dass als Korrosionsbeschichtung einer der folgenden Lacke eingesetzt wird:
- Siliciumcarbid mit einem geeigneten Lösungsmittel,
- Polysiloxane oder Silane mit einem geeigneten Lösungsmittel.

Erfindungsgemäß wird zumindest der Bereich zwischen Grundblech und Patchblech mit einer Korrosionsschutzbeschichtung beschichtet, die den bei der Warmumformung herrschenden hohen Temperaturen standhalten kann. Die Beschichtung erfolgt, bevor die Bleche aufeinandergelegt und lagesicher fixiert werden. Die Lagesicherung erfolgt erst anschließend, wobei dann das so gebildete Bauteil, bestehend aus Grundblech und Patchblech auf eine zur Warmumformung geeignete Temperatur erwärmt und anschließend warm umgeformt wird.

Insbesondere wird hierbei erreicht, dass die Korrosionsbeschichtung bei der Warmumformung quasi eingebrannt wird und einen dauerhaften Korrosionsschutz bilden kann.

Durch eine geeignete Lösemittelzusammensetzung lassen sich die Beschichtungen in einfacher Weise auf den Oberflächen der entsprechenden Teile aufbringen.

Bevorzugt ist hierbei vorgesehen, dass als Lösungsmittel
- Xylole
- Benzene,
- Alkohole oder
- Tetrahydrofuran,
verwendet wird.

Als Benzene können beispielsweise Benzol eingesetzt werden, als Alkohole können beispielsweise Butanol eingesetzt werden, zur kurzfristigen Steigerung der Viskosität nach der Applikation kann auch Lösemittel verwendet werden mit hohem Dampfdruck wie beispielsweise Tetrahydrofuran.

Bei der Anwendung von Polysiloxanen oder Silanen wird vorzugsweise auf Disiloxan, Trisiloxan, Octamethyltrisiloxan oder Decamethylcyklopentasiloxan zugegriffen. Auch Coarbosilane eignen sich hier als Basis.

Zudem wird vorzugsweise vorgesehen, dass ein Grundblech und Patchblech aus 22MnB5 verwendet wird.

Auch ist vorzugsweise vorgesehen, dass für das Grundblech und das Patchblech als Ausgangsmaterial verzinktes oder mit einer Zink-Nickel Beschichtung oder mit einer Aluminium-Silicium Beschichtung versehenes Stahlblech eingesetzt wird.

Zudem ist bevorzugt vorgesehen, dass das nach dem Verfahren hergestellte Bauteil mit einem Korrosionsschutzlack beschichtet wird.

Demzufolge wird das Verfahrensprodukt nach der Warmumformung mit einem Korrosionsschutzlack beschichtet. Dieser muss aber nicht in Bereiche zwischen dem Grundblech und dem Patchblech eindringen, weil dieser Bereich durch die erfindungsgemäße Korrosionsschutzbeschichtung geschützt ist, sondern nur das übrige Bauteil wird insgesamt mit Korrosionsschutzlack beschichtet.

Vorzugsweise ist dabei vorgesehen, dass das Bauteil mit einer KTL-Beschichtung, also einer kathodischen Tauchlackierung, als Korrosionsschutzlack beschichtet wird.

Eine besonders bevorzugte Ausbildung wird darin gesehen, dass die Korrosionsschutzbeschichtung durch die bei der Warmumformung auf die Bauteileinheit aufgebrachte Temperatur eingebrannt wird.

Hierbei wird die zwischen den Blechteilen aufgebrachte Korrosionsschutzbeschichtung bei der Warmumformung eingebrannt. Es ist hierzu kein zusätzlicher Energieaufwand erforderlich, sondern zur Warmumformung eingebrachte Energie reicht aus, um das Einbrennen zu bewirken.

Zudem ist bevorzugt vorgesehen, dass das Patchblech oder die Patchbleche mittels eines Fügevorganges an dem Grundblech fixiert wird/werden.

Hierbei kann unter Umständen bevorzugt vorgesehen sein, dass der Fügevorgang ein Clinchen ist, bei dem die Materialien von Patchblech und Grundblech durch lokale Verformung miteinander verbunden werden.

Auch kann bevorzugt vorgesehen sein, dass der Fügevorgang durch Schweißpunkte in ein oder mehreren Bereichen der Bauteileinheit durchgeführt wird.

Gegenstand der Erfindung ist ferner ein Bauteil, welches nach dem Verfahren nach einem der Ansprüche hergestellt ist, insbesondere ist Gegenstand der Erfindung ein Bauteil, welches ein Karosseriestrukturteil für ein Fahrzeug ist.

Ein erfindungsgemäßes Verfahrensprodukt ist in der anliegenden Zeichnung dargestellt und im Folgenden kurz beschrieben.

Es zeigt:
Figur 1 eine Bauteileinheit aus Grundblech und Patchblech in Ansicht;
Figur 2 desgleichen im Schnitt gesehen.

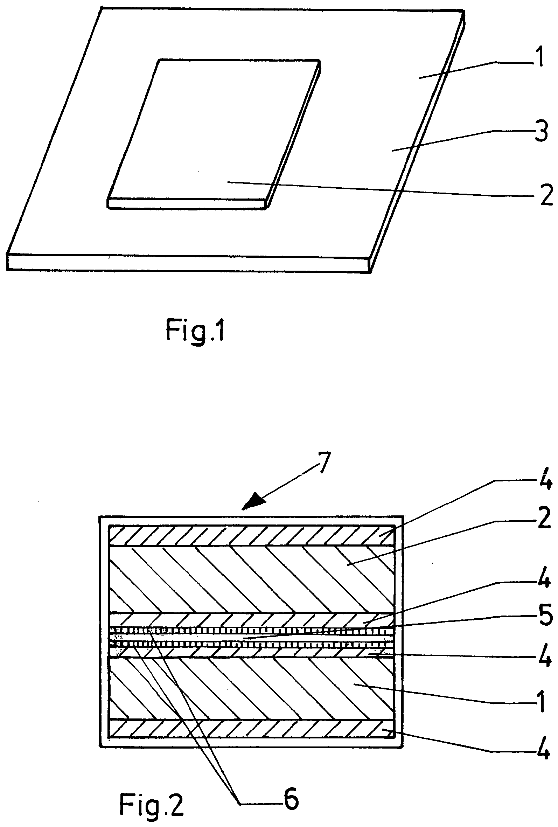

In Figur 1 ist ein Grundblech 1 und ein darauf angebrachtes Patchblech 2 ersichtlich, wobei zwischen beiden Blechen ein Fügespalt 3 gebildet ist. In der Figur 2 ist eine Schnittansicht zur Verdeutlichung gezeigt, die ein nach dem erfindungsgenäßen Verfahren erzeugtes Endprodukt zeigt.

Hierbei ist auf das Grundblech 1, welches beispielsweise aus eine am Materialgüte 22 MnB5 ein entsprechendes Patchblech 2 gleicher Materialqualität aufgesetzt. Das Grundblech 1 ist oberseitig und unterseitig mit einer Aluminiumsiliciumschicht 4 versehen. Ebenso ist das Patchblech 2 oberseitig und unterseitig mit einer solchen Aluminiumsiliciumbeschichtung 4 versehen.

Im Fügespalt 5 zwischen den beiden Teilen 1,2 ist eine hochtemperaturbeständige Beschichtung 6 aufgebracht, die bei der Warmumformung des gesamten Bauteiles aufgrund der dabei auftretenden Temperaturen eingebrannt wird. Hierdurch ist der Fügespalt 5 zwischen den Bestandteilen 1,2 korrosionsgeschützt.

Das gesamte Bauteil wird mit einer KTL-Beschichtung 7 beschichtet.

Insbesondere die Schnittansicht ist nur schematisch gezeigt. Der grundsätzliche Aufbau und die Vorteile des erfindungsgemäß angewandten Verfahrens sind aber hierdurch erkennbar.

Die Erfindung ist nicht auf das Ausführungsbeispiel beschränkt, sondern im Rahmen der Offenbarung vielfach variabel.

Alle neuen in der Beschreibung und/oder Zeichnung offenbarten Einzel- und Kombinationsmerkmale werden als erfindungswesentlich angesehen.

## Patentansprüche

1. Verfahren zur Herstellung von Bauteilen aus Metallblech, insbesondere aus Stahlblech, wobei auf ein Grundblech (1) zur Bildung einer Materialdoppelung mindestens ein Patchblech (2) aufgelegt wird und lagesicher fixiert wird, die so gebildete Bauteileinheit aus Grundblech (1) und Patchblech (2) auf eine zur Warmumformung geeignete Temperatur erwärmt und anschließend zu dem Bauteil warmumgeformt wird und vorzugsweise anschließend oder gleichzeitig einer partiellen oder totalen Kühlung oder Abschreckung zum Zwecke einer gezielten Gefügeumwandlung unterworfen wird, **dadurch gekennzeichnet, dass** das Grundblech (1) im Auflagebereich des Patchbleches (2) oder das Patchblech (2) auf seiner dem Grundblech (1) zugewandten Seite oder sowohl Grundbleche (1) als auch Patchblech (2) in dem entsprechenden Bereich vor dem Auflegen des Patchbleches (2) auf das Grundblech (1) mit einer den bei der Warmumformung auftretenden Temperaturen widerstehenden Korrosionsschutzbeschichtung (6) beschichtet wird, die auch der Abdichtung dieses Spaltes dienen kann und so das Eindringen von Korrosionsfördernden Substanzen verhindern kann, und dass als Korrosionsbeschichtung (6) einer der folgenden Lacke eingesetzt wird:
- Siliciumcarbid mit einem geeigneten Lösungsmittel,
- Polysiloxane oder Silane mit einem geeigneten Lösungsmittel.

2. Verfahren nach Anspruch 1, **dadurch gekennzeichnet, dass** als Lösungsmittel
- Xylole
- Benzene,
- Alkohole oder
- Tetrahydrofuran,
verwendet wird.

3. Verfahren nach einem der Ansprüche 1 oder 2, **dadurch gekennzeichnet, dass** ein Grundblech (1) und Patchblech (2) aus 22MnB5 verwendet wird.

4. Verfahren nach einem der Ansprüche 1 bis 3, **dadurch gekennzeichnet, dass** für das Grundblech (1) und das Patchblech (2) als Ausgangsmaterial verzinktes oder mit einer Zink-Nickel Beschichtung oder mit einer Aluminium-Silicium Beschichtung versehenes Stahlblech eingesetzt wird.

5. Verfahren nach einem der Ansprüche 1 bis 4, **dadurch gekennzeichnet, dass** das nach dem Verfahren hergestellte Bauteil mit einem Korrosionsschutzlack beschichtet wird.

6. Verfahren nach Anspruch 5, **dadurch gekennzeichnet, dass** das Bauteil mit einer KTL-Beschichtung (7), also einer kathodischen Tauchlackierung, als Korrosionsschutzlack beschichtet wird.

7. Verfahren nach Anspruch 1, **dadurch gekennzeichnet, dass** die Korrosionsschutzbeschichtung (6) durch die zur Warmumformung auf die Bauteileinheit aufgebrachte Temperatur eingebrannt wird.

8. Verfahren nach Anspruch 1, **dadurch gekennzeichnet, dass** das Patchblech (2) oder die Patchbleche mittels eines Fügevorganges an dem Grundblech (1) fixiert wird/werden.

9. Verfahren nach Anspruch 1, **dadurch gekennzeichnet, dass** der Fügevorgang ein Clinchen ist, bei dem die Materialien von Patchblech (2) und Grundblech (1) durch lokale Verformung miteinander verbunden werden.

10. Verfahren nach Anspruch 8, **dadurch gekennzeichnet, dass** der Fügevorgang durch Schweißpunkte in ein oder mehreren Bereichen der Bauteileinheit durchgeführt wird.

11. Bauteil, hergestellt nach dem Verfahren gemäß einem der Ansprüche 1 bis 10.

12. Bauteil nach Anspruch 11, **dadurch gekennzeichnet, dass** es ein Karosseriestrukturteil für ein Fahrzeug ist.

## Claims

1. A method for producing components from metal plate, in particular from steel sheet, on a basic plate (1), for producing a doubling of the material, at least one patch plate (2) being placed and fixed in position, the component assembly thus formed from basic plate (1) and patch plate (2) being heated to a temperature suitable for hot forming, and then being hot-formed to the component and preferably thereafter or simultaneously subjected to a partial or total cooling or quenching process for the purpose of a specific structural transformation, **characterized by that** the basic plate (1), in the supporting region of the patch plate (2), or the patch plate (2), on its side facing the basic plate (1), or the basic plates (1) as well as the patch plate (2), in the corresponding region, are coated, prior to placing the patch plate (2) on the basic plate (1), with a corrosion protection coating (6) resisting the temperatures occurring during the hot-forming process, said corrosion protection coating (6) being also suitable for sealing this gap and thus to prevent ingress of corrosion-promoting substances, and that as a corrosion protection coating (6), one of the following lacquers is used:
- silicon carbide with a suitable solvent,
- polysiloxanes or silanes with a suitable solvent .

2. The method of claim 1, **characterized by that** as a solvent,
- xylols,
- benzenes,
- alcohols, or
- tetrahydrofuran,
are used.

3. The method of one of claims 1 to 2, **characterized by that** a basic plate (1) and patch plate (2) from 22MnB5 are used.

4. The method of one of claims 1 to 3, **characterized by that** for the basic plate (1) and the patch plate (2), steel sheet provided with a zinc-plating or with a zinc-nickel coating or with an aluminum-silicon coating is used as a starting material.

5. The method of one of claims 1 to 4, **characterized by that** the component produced according to the method is coated with a corrosion protection lacquer .

6. The method of claim 5, **characterized by that** the component is coated with an EPD coating (7), i.e., by cathodic electrodeposition, as a corrosion protection lacquer.

7. The method of claim 1, **characterized by that** the corrosion protection coating (6) is burnt in by the temperature applied to the component assembly for the hot-forming process.

8. The method of claim 1, **characterized by that** the patch plate (2) or the patch plates is/are fixed to the basic plate (1) by means of a joining process.

9. The method of claim 1, **characterized by that** the joining process is a clinching process, wherein the materials of patch plate (2) and basic plate (1) are joined to each other by local deformation.

10. The method of claim 8, **characterized by that** the joining process is performed by welding points in one or more regions of the component assembly.

11. A component produced according to the method of one of claims 1 to 10.

12. The component of claim 11, **characterized by that** it is a body-structure part for an automobile.

## Revendications

1. Procédé de production de composants à partir d'une plaque métallique, en particulier à partir de tôle en acier, dans lequel sur une plaque de base (1) pour produire un redoublement du matériau, au moins une plaque patch (2) est positionnée et fixée en position, l'ensemble des composants ainsi réalisé à partir de la plaque de base (1) et la plaque patch (2) est chauffé à une température appropriée pour le formage à chaud, et puis est formé à chaud pour obtenir le composant et de préférence ensuite ou simultanément est soumis à un procédé de refroidissement total ou de trempe pour le but d'une transformation structurelle spécifique, **caractérisé en ce que** la plaque de base (1), dans la zone de support de la plaque patch (2), ou la plaque patch (2), sur son côté dirigé vers la plaque de base (1), ou des plaques de base (1) aussi bien que la plaque patch (2), dans la zone correspondante, sont recouvertes, avant le positionnement de la plaque patch (2) sur la plaque de base (1), d'une couche de protection contre la corrosion (6) résistant aux températures apparaissant pendant le procédé de formage à chaud, ladite couche de protection contre la corrosion (6) aussi étant appropriée pour étanchéifier cette fente et ainsi pour empêcher l'intrusion de substances favorisant la corrosion, et ce que comme couche de protection contre la corrosion (6), un des vernis suivants est utilisé:
- un carbure de silicium avec un solvant approprié,
- des polysiloxanes ou silanes avec un solvant approprié.

2. Procédé selon la revendication 1, **caractérisé en ce que** comme solvant
- des xylènes,
- des benzènes,
- des alcools, ou
- du tétrahydrofurane,
sont utilisés.

3. Procédé selon une des revendications 1 à 2, **caractérisé en ce qu'**une plaque de base (1) et une plaque patch (2) à partir de 22MnB5 sont utilisées.

4. Procédé selon une des revendications 1 à 3, **caractérisé en ce que** pour la plaque de base (1) et la plaque patch (2), une tôle en acier pourvue d'un zingage ou d'une couche de zinc-nickel ou d'une couche d'aluminium-silicium est utilisée comme matériau de départ.

5. Procédé selon une des revendications 1 à 4, **caractérisé en ce que** le composant produit selon le procédé est recouvert d'un vernis de protection contre la corrosion.

6. Procédé selon la revendication 5, **caractérisé en ce que** le composant est recouvert d'une couche EDC (7), c'est-à-dire, par électrodéposition cationique, comme vernis de protection contre la corrosion.

7. Procédé selon la revendication 1, **caractérisé en ce que** la couche de protection contre la corrosion (6) est cuite par la température appliquée sur l'ensemble des composants pour le procédé de formage à chaud.

8. Procédé selon la revendication 1, **caractérisé en ce que** la plaque patch (2) ou les plaques patch est/sont fixée/s à la plaque de base (1) au moyen d'un procédé d'assemblage.

9. Procédé selon la revendication 1, **caractérisé en ce que** le procédé d'assemblage est un clinchage, dans lequel les matériaux de la plaque patch (2) et de la plaque de base (1) sont assemblés par déformation locale.

10. Procédé selon la revendication 8, **caractérisé en ce que** le procédé d'assemblage est exécuté par des points de soudure dans une ou plusieurs zones de l'ensemble des composants.

11. Composant produit selon le procédé défini dans une des revendications 1 à 10.

12. Composant selon la revendication 11, **caractérisé en ce qu'**il est une partie structurelle de carrosserie pour une automobile.
